# EUROPEAN PATENT APPLICATION

(11) **EP 4 772 925 A1**
(43) Date of publication of application: **08.07.2026**
(21) Application number: 25815178.6
(22) Date of filing: 29.05.2025
(51) Int. Cl.: G02B 6/42

(54) **SINGLE-FIBER TRI-DIRECTIONAL OPTICAL ASSEMBLY**

(30) Priority: 29.05.2024 CN 202410678774
(71) Applicant: Potron Technology Co.,Ltd., Shenzhen, Guangdong P.R. 518102 (CN)
(72) Inventor: WANG, Qiao, Shenzhen, Guangdong 518110 (CN); WANG, Sijun, Shenzhen, Guangdong 518110 (CN); ZHAO, Biao, Shenzhen, Guangdong 518110 (CN); LAI, Shanshan, Shenzhen, Guangdong 518110 (CN); YANG, Yuhao, Shenzhen, Guangdong 518110 (CN)
(74) Representative: Bayramoglu et al.
(86) International application number: PCT/CN2025/098220
(87) International publication number: WO 2025/247356

(57) **Abstract**

The present application relates to a single-fiber tri-directional optical assembly. The single-fiber tri-directional optical assembly includes: a base having an inner cavity for transmitting an optical signal, where the base is provided with a first end portion and a second end portion disposed opposite to each other, and the base includes at least a first side wall and a second side wall disposed adjacent to each other between the first end portion and the second end portion; a tail fiber unit disposed at the first end portion and configured to receive an external optical signal; a first transmitting unit disposed on the first side wall, where a first optical signal emitted by the first transmitting unit is visible light with a preset wavelength, and the first optical signal is configured to be transmitted to the tail fiber unit; a second transmitting unit disposed at the second end portion, where a second optical signal emitted by the second transmitting unit is configured to be transmitted to the tail fiber unit; and an optical receiving unit disposed on the second side wall, and configured to receive the external optical signal received by the tail fiber unit. The visible light in the first transmitting unit enables inspection of a fault in an optical link within a short-distance transmission range, thereby saving costs.

## Description

The present application claims priority to Chinese Patent Application No. 202410678774.3, filed with the China National Intellectual Property Administration (CNIPA) on May 29, 2024, and entitled "SINGLE-FIBER TRI-DIRECTIONAL OPTICAL ASSEMBLY", which is incorporated herein by reference in its entirety.

### TECHNICAL FIELD

The present application relates to the technical field of optical communication, in particular to a single-fiber tri-directional optical assembly.

### BACKGROUND

With the development of access network technology, the concept of Fiber-To-The-Home (FTTH) is continuously deepened. Corresponding technical solutions are becoming increasingly diverse, and are gradually put into practical application. FTTH meets the demand for a high bandwidth by integrated services such as data, voice, and cable television (CATV). However, to achieve widespread adoption of FTTH, access costs need to be reduced. Consequently, adopting a single-fiber tri-directional transmission technology to implement the transmission of such integrated services and reduce access costs has gradually become a mainstream direction in the development of FTTH.

A tri-directional optical sub-assembly (TRI-DI OSA) is an integration of two types of technologies: the first technology is for reception of CATV signals, and the second technology is for reception and transmission of Passive Optical Network (PON)signals, thereby achieving a two-receiver, one-transmitter functionality. With continuous technological innovation and development, the TRI-DI OSA has also adopted a two-receiver, one-transmitter mode. Furthermore, it has evolved from a large-volume, multi-component device requiring numerous coupling steps into a single-fiber tri-directional optical assembly featuring monolithic integration with butt-joint growth of active layers and precise alignment between the optical waveguide and the device.

Currently, with the popularization of FTTH, single-fiber tri-directional optical devices are widely used. However, when a fault occurs in an optical link, such devices need to be disassembled manually for inspection, which increases maintenance costs and disassembly workload, making usage less convenient.

### SUMMARY

The present application provides a single-fiber tri-directional optical assembly. An optical link of the single-fiber tri-directional optical assembly can be inspected and calibrated without disassembly, thereby reducing maintenance costs and workload, and improving the convenience of the single-fiber tri-directional optical assembly.

The present application provides a single-fiber tri-directional optical assembly, including:
a base having an inner cavity for transmitting an optical signal, wherein the base is provided with a first end portion and a second end portion disposed opposite to each other, and the base comprises at least a first side wall and a second side wall disposed adjacent to each other between the first end portion and the second end portion;
a tail fiber unit disposed at the first end portion and configured to receive an external optical signal;
a first transmitting unit disposed on the first side wall, wherein a first optical signal emitted by the first transmitting unit is visible light with a preset wavelength, and the first optical signal is configured to be transmitted to the tail fiber unit;
a second transmitting unit disposed at the second end portion, wherein a second optical signal emitted by the second transmitting unit is configured to be transmitted to the tail fiber unit; and
an optical receiving unit disposed on the second side wall, and configured to receive the external optical signal received by the tail fiber unit.

In a possible implementation, the first transmitting unit is configured to detect an optical link by enabling the visible light to be turned on or off within a preset range; where the preset range is 5 km.

In a possible implementation, the visible light is visible red light with the preset wavelength of 650 nm.

In a possible implementation, the first transmitting unit includes a first transmitting module, a first adjustment ring, and a first filter, the first transmitting module being mounted to the base by the first adjustment ring, and the first filter being disposed within the inner cavity; where
the first transmitting module includes a first optical axis, and the first filter is located on the first optical axis, such that the visible light emitted by the first transmitting module is reflected via the first filter and transmitted to the tail fiber unit.

In a possible implementation, the second transmitting unit includes a second transmitting module and a mounting base, the second transmitting module being mounted to the base by the mounting base; where
the second optical signal emitted by the second transmitting module has a wavelength of 1310 nm.

In a possible implementation, the optical receiving unit includes an optical receiving module, a second filter and a third filter, the optical receiving module being connected to the base, and the second filter and the third filter being disposed within the inner cavity; where
the optical receiving module comprises a second optical axis perpendicular to the third filter, the second filter is inclined relative to the third filter, and the external optical signal received by the tail fiber unit is refracted by the second filter, transmitted to the third filter, filtered by the third filter, and further transmitted to the optical receiving module.

In a possible implementation, the base is provided with a first mounting hole in communication with the inner cavity, and at least a portion of the optical receiving module is mounted into the first mounting hole; where a bottom wall of the first mounting hole is provided with a first mounting groove, and the third filter is bonded into the first mounting groove; and
the base is further provided with a second mounting hole in communication with the inner cavity, at least a portion of the tail fiber unit is mounted into the second mounting hole, a bottom wall of the second mounting hole is provided with a second mounting groove, the second filter is bonded into the second mounting groove, and an angle of 45° is formed between a mounting surface of the second mounting groove and the second optical axis.

In a possible implementation, the base is provided with a third mounting hole in communication with the inner cavity, and at least a portion of the first transmitting module is mounted into the third mounting hole; and
a bottom wall of the third mounting hole is provided with a third mounting groove, the first filter is bonded into the third mounting groove by dispensing, and an angle of 45° is formed between a mounting surface of the third mounting groove and the first optical axis.

In a possible implementation, the base is provided with a fourth mounting hole in communication with the inner cavity, a protruding ring is disposed at an edge of the fourth mounting hole, and the mounting base is crimped into the protruding ring.

In a possible implementation, the tail fiber unit includes a fiber tail boot, a tail fiber adjustment ring and a ceramic ferrule; where
the ceramic ferrule is mounted to the base by the tail fiber adjustment ring, and the fiber tail boot is sleeved on a radial outer side of the tail fiber adjustment ring.

Compared with the prior art, the foregoing technical solutions provided by embodiments of the present application have the following advantages:
According to the single-fiber tri-directional optical assembly provided in an embodiment of the present application, by using visible light in the first transmitting unit, inspection of a fault in an optical link within a short-distance transmission range can be achieved, thereby saving the cost of manual disassembly and providing a good user experience.

### BRIEF DESCRIPTION OF DRAWINGS

The accompanying drawings, which are incorporated in and constitute a part of this specification, illustrate embodiments consistent with the present invention and, together with the description, serve to explain principles of the present invention.

In order to describe the technical solutions in embodiments of the present invention or in the prior art more clearly, accompanying drawings which need to be used in the description of the embodiments or the prior art will be briefly introduced below. Obviously, a person of ordinary skill in the art may still derive other accompanying drawings according to these accompanying drawings without involving any inventive efforts.

One or more embodiments are exemplarily described with reference to the corresponding figures in the accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.
FIG. 1 is a schematic structural diagram of a single-fiber tri-directional optical assembly according to an embodiment of the present application.
FIG. 2 is a schematic structural diagram of a tail fiber unit according to an embodiment of the present application.
FIG. 3 is a front view of FIG. 1.
FIG. 4 is a sectional view taken along line A-A of FIG. 3.
FIG. 5 is a top view of FIG. 1.
FIG. 6 is a sectional view taken along line B-B of FIG. 5.

Reference numerals of the drawings:
1. base; 11. inner cavity; 12. first end portion; 121. second mounting hole; 1211. second mounting groove; 13. second end portion; 131. fourth mounting hole; 132. protruding ring; 14. first side wall; 141. third mounting hole; 1411. third mounting groove; 15. second side wall; 151. first mounting hole; 1511. first mounting groove; 16. third side wall; 17. fourth side wall;
2. tail fiber unit; 21. fiber tail boot; 22. tail fiber adjustment ring; 23. ceramic ferrule; 3. first transmitting unit; 31. first transmitting module; 32. first adjustment ring; 33. first filter; 4. second transmitting unit; 41. second transmitting module; 42. mounting base; 5. optical receiving unit; 51. optical receiving module; 52. second filter; and 53. third filter.

### DETAILED DESCRIPTION OF EMBODIMENTS

In order to make the purposes, technical solutions and advantages of the embodiments of the present application clearer, the technical solutions in the embodiments of the present application will be described clearly and completely below in conjunction with accompanying drawings of the present application. Apparently, the embodiments described are some rather than all of the embodiments of the present application. All other embodiments obtained by a person of ordinary skill in the art based on the embodiments of the present application without involving inventive efforts shall fall within the protection scope of the present application.

The following disclosure provides a number of different embodiments or examples for implementing different structures of the present invention. In order to simplify the disclosure of the present invention, components and arrangements of particular examples are described hereinafter. Certainly, the descriptions are merely examples, and are not intended to limit the present invention. In addition, reference numbers and/or letters may be repeated in different examples of the present invention. Such repetition is for the purpose of simplicity and clarity and is not indicative of the relationship between the various embodiments and/or arrangements discussed.

For ease of description, spatially relative terms can be used herein to describe the relative position relationship or movement between an element or feature and another element or feature as illustrated in the figures, for example, "internal", "external", "inside", "outside", "under", "below", "above", "over", "front", "rear", etc. These spatially relative terms are intended to encompass different orientations of the apparatus in use or operation other than those depicted in the accompanying drawings. For example, if the apparatus in the accompanying drawings undergoes a positional inversion, a change in orientation, or a change in motion state, these directional indications shall change accordingly. For instance, an element described as "below" or "under" another element or feature would then be oriented as "above" or "over" another element or feature. Thus, the example term "below" may include both upper and lower orientations. The apparatus can be otherwise oriented (rotated 90 degrees or in other directions) and the spatially relative descriptors used herein are interpreted accordingly.

The present application provides a single-fiber tri-directional optical assembly, so as to address the technical problem in the related art that when a fault occurs in an optical link, devices need to be disassembled manually for inspection, which increases maintenance costs and disassembly workload, making usage less convenient. By using visible light in the first transmitting unit, inspection of a fault in an optical link within a short-distance transmission range can be achieved, thereby saving the cost of manual disassembly and providing a good user experience.

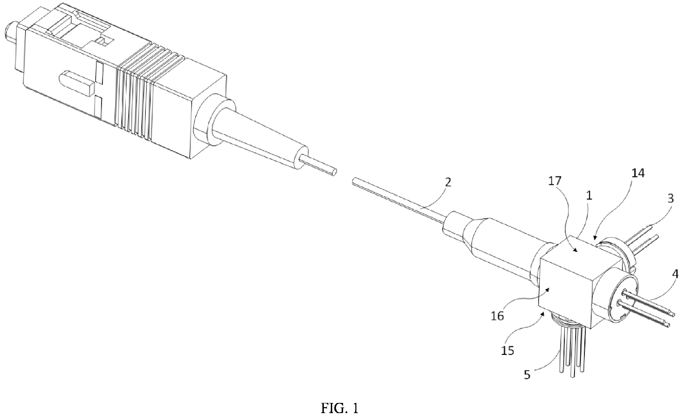

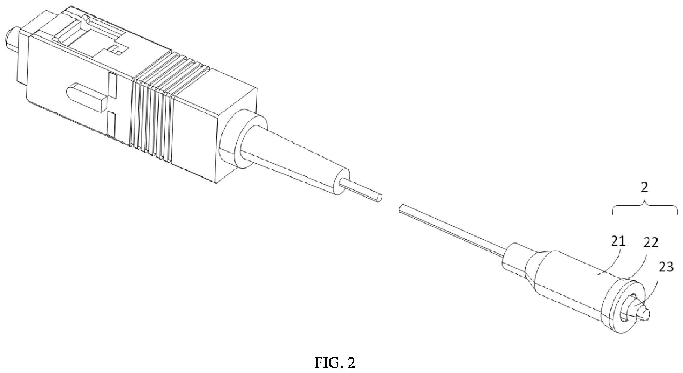

In some exemplary embodiments, as shown in FIGS. 1-6, a single-fiber tri-directional optical assembly is provided, which enables receiving and transmitting of a plurality of signals by a single optical device, thereby reducing the number of optical devices and lowering the cost of the optical assembly.

The single-fiber tri-directional optical assembly includes a base 1, a tail fiber unit 2, a first transmitting unit 3, a second transmitting unit 4 and an optical receiving unit 5.

The base 1 is made of, for example, a metallic material, which allows the adhesive to be cured by heating, and features high resistance to deformation and durability, thereby providing the base 1 with a long service life. The base 1 has an inner cavity 11 for transmitting an optical signal, where the base 1 is provided with a first end portion 12 and a second end portion 13 disposed opposite to each other, and the base 1 includes at least a first side wall 14 and a second side wall 15 disposed adjacent to each other between the first end portion 12 and the second end portion 13. The base 1 is, for example, in the shape of a cuboid. In addition to the first side wall 14 and the second side wall 15, the base may further include a third side wall 16 and a fourth side wall 17. The first side wall 14, the second side wall 15, the third side wall 16, and the fourth side wall 17 are connected in sequence.

In this embodiment, as shown in FIGS. 1-6, the tail fiber unit 2 is disposed, for example, at the first end portion 12. The tail fiber unit 2 is configured to receive an external optical signal, so as to transmit the external optical signal to the optical receiving unit 5, thereby completing signal transmission.

In some examples, the tail fiber unit 2 includes, for example, a fiber tail boot 21, a tail fiber adjustment ring 22, and a ceramic ferrule 23. The ceramic ferrule 23 is mounted to the base 1 by the tail fiber adjustment ring 22, and the fiber tail boot 21 is sleeved on a radial outer side of the tail fiber adjustment ring 22.

The first end portion 12 of the base 1 is further provided with a second mounting hole 121. The second mounting hole 121 is in communication with the inner cavity 11, thereby ensuring normal transmission of an optical signal. At least a portion of the ceramic ferrule 23 of the tail fiber unit 2 is mounted into the second mounting hole 121, thereby enabling transmission of the external optical signal to the optical receiving unit 5. The ceramic ferrule 23 has good thermal stability, corrosion resistance, and low loss, which can improve the transmission capability of the tail fiber unit 2 and further enhance the reliability and transmission rate of the tail fiber unit 2.

The tail fiber adjustment ring 22 is sleeved on a radial outer side of the ceramic ferrule 23 and is connected to the ceramic ferrule 23 and the first end portion 12 of the base 1 separately. The tail fiber adjustment ring 22 may cover the second mounting hole 121, so as to achieve integrity and closure in appearance of the base 1. The tail fiber adjustment ring 22 may be welded to the base 1 to improve reliability during mounting. The tail fiber adjustment ring 22 can be finely adjusted to achieve a more secure connection between the tail fiber adjustment ring 22 and the ceramic ferrule 23, which prevents the ceramic ferrule 23 from loosening or shaking, thereby further enhancing reliability during connection.

The fiber tail boot 21 is sleeved on a radially outer side of the tail fiber adjustment ring 22 and is fixedly connected to the tail fiber adjustment ring. The fiber tail boot 21 covers a portion of the tail fiber adjustment ring 22 and a portion of the ceramic ferrule 23 to prevent exposure and provide protection, thereby extending the service life of the tail fiber unit 2.

In this embodiment, as shown in FIGS. 1-6, the first transmitting unit 3 is disposed on the first side wall 14. A first optical signal emitted by the first transmitting unit 3 is visible light with a preset wavelength, and is configured to be transmitted to the tail fiber unit 2, which then transmits the signal to the outside, thereby achieving signal transmission. The preset wavelength is, for example, 650 nm, and the visible light is visible red light. The first transmitting unit 3 is configured to detect an optical link by enabling the visible light to be turned on or off within a preset range. The preset range is, for example, 5 km.

With the visible light emitted by the first transmitting unit 3, specifically the visible red light with a wavelength of 650 nm emitted by the first transmitting unit 3, whether the single-fiber tri-directional optical assembly operates normally is judged. For example, if normal red light flickering is observed, it indicates the single-fiber tri-directional optical assembly is in normal operation. If a fault occurs in a transmission path of the optical link, the single-fiber unidirectional optical assembly may not function properly, and red light flickering may not be observed.

In addition, it is also possible to determine whether an optical device of an optical modem unit used in combination with the single-fiber tri-directional optical assembly within a range of 5 km emits light normally, so as to calibrate the optical transmission link and reduce manual inspection of faults in the optical link. If the optical device emits light normally, it can be determined that the issue lies in the transmission link of the single-fiber tri-directional optical assembly; if it does not emit light normally, it can be determined that the issue lies in the optical device. By adopting the above approach, labor costs can be saved when troubleshooting the cause of faults in an optical link.

In some examples, the first transmitting unit 3 includes a first transmitting module 31, a first adjustment ring 32, and a first filter 33, the first transmitting module 31 being mounted to the base 1 by the first adjustment ring 32, and the first filter 33 being disposed within the inner cavity 11. The first adjustment ring 32 is sleeved on a radial outer side of the first transmitting module 31, and connected to the first transmitting module 31. The first adjustment ring 32 can be finely adjusted to achieve a more secure connection between the first transmitting module 31 and the first adjustment ring 32. The first adjustment ring 32 is rotated, for example, clockwise or counterclockwise, to achieve a tight connection between the first adjustment ring 32 and the first transmitting module 31.

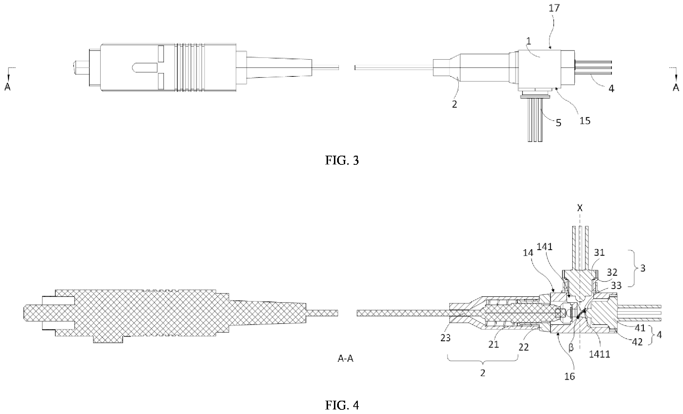

The first transmitting module 31 includes a first optical axis (referring to the X-axis shown in FIG. 4), and the first filter 33 is located on the first optical axis, such that the visible light emitted by the first transmitting module 31 is reflected via the first filter 33 and transmitted to the tail fiber unit 2, thereby achieving reception of the optical signal. The first filter 33 is inclined relative to the first transmitting module 31 to form an angle β of 45° between the first filter 33 and the first optical axis, such that the visible light emitted by the first transmitting module 31 can be reflected by the first filter 33 to the tail fiber unit 2, and transmitted externally through the ceramic ferrule 23 thereof, thereby completing output of the optical signal.

The first transmitting module 31 is provided with a convex lens for light convergence. By using convergent light transmission, the signal loss of internal light rays in the optical path can be greatly reduced when wavelength intervals are narrow. After the first transmitting unit 3 is powered on, the first transmitting module 31 converts an incoming digital signal into a 650 nm optical signal, which is converged by the calibrated convex lens of the first transmitting module 31, and then emitted as visible red light with a wavelength of 650 nm. The visible red light with a wavelength of 650 nm can be used as an indicator. For example, when the single-fiber tri-directional optical assembly is used within a range of 5 km, if red light is emitted, it indicates the optical assembly operates normally; if the red light is interrupted, it serves as a warning that there is an issue with the optical link or that the normal operating range has been exceeded.

The first side wall 14 of the base 1 is provided with a third mounting hole 141. The third mounting hole 141 is in communication with the inner cavity 11, thereby ensuring normal transmission of an optical signal. At least a portion of the first transmitting module 31 may be mounted into the third mounting hole 141.

It is to be noted that the first transmitting module 31 may also be mounted to the base 1 by means of crimping. For example, the convex lens of the first transmitting module 31 is pressed into the third mounting hole 141 of the bare base 1 by physical gravity, such that the convex lens of the first transmitting module 31 can be fully received within the third mounting hole 141 of the base 1. During use of the single-fiber tri-dimensional optical assembly, loss may occur over time, making the first transmitting module 31 liable to fall off. Therefore, the first transmitting module 31 and the base 1 may be welded together by applying laser at their connection position, thereby improving reliability during connection.

A bottom wall of the third mounting hole 141 is provided with a third mounting groove 1411. The first filter 33 is bonded into the third mounting groove 1411 by dispensing, and is fixed by high-temperature baking to enhance reliability during connection. An angle of 45° is formed between a mounting surface of the third mounting groove 1411 and the first optical axis, such that the first filter 33, when fixed, forms an angle of 45° with the first optical axis.

The third mounting groove 1411 is, for example, a U-shaped slot. Dispensing may be conducted on two opposite side edges of the third mounting groove, and the amount of adhesive dispensed is kept very small. If too much adhesive is dispensed, it may easily overflow, which requires rework and end-face cleaning for the base 1. The specific amount of adhesive dispensed may be determined according to actual conditions.

In this embodiment, as shown in FIGS. 1-6, the second transmitting unit 4 is disposed at the second end portion 13. The second optical signal emitted by the second transmitting unit 4 is configured to be transmitted to the tail fiber unit 2, thereby completing output of the optical signal.

The second transmitting unit 4 includes a second transmitting module 41 and a mounting base 42. The second transmitting module 41 is mounted to the base 1 by the mounting base 42. The second optical signal emitted by the second transmitting module 41 has a wavelength of, for example, 1310 nm. Light with a wavelength of 1310 nm belongs to invisible light. When the second transmitting module 41 emits invisible light, the light is converted into a corresponding digital signal, which is transmitted to the ceramic ferrule 23 of the tail fiber unit 2, and then transmitted through the ferrule 23 to an external terminal device. In this way, the output of the optical signal is completed, and information such as audios and videos is provided to a user.

The second end portion 13 of the base 1 is provided with a fourth mounting hole 131. The fourth mounting hole 131 is in communication with the inner cavity 11, thereby ensuring normal transmission of an optical signal. A protruding ring 132 is disposed at an edge of the fourth mounting hole 131, and the mounting base 42 may be crimped into the protruding ring 132.

The mounting base 42 may be mounted by crimping, in which the mounting base 42 is pressed into the bare base 1 by physical gravity, ensuring that at least a portion of the mounting base 42 can be fully received within the fourth mounting hole 131 of the base 1. During use of the single-fiber tri-dimensional optical assembly, the mounting base 42 is liable to fall off over time. Therefore, the mounting base 42 and the base 1 may be welded together by applying laser at their connection position, thereby improving reliability during connection of the two.

It is to be noted that, the connection manner between the second transmitting module 41 and the mounting base 42 is the same as or similar to the connection manner between the mounting base 42 and the base 1 described above. In both cases, crimping and welding may be adopted to secure the second transmitting module 41. By adopting crimping, it can be ensured that the convex lens of the second transmitting module 41 is aligned with the second mounting hole 121 for mounting the ceramic ferrule 23 of the tail fiber unit 2, without damaging the convex lens of the second transmitting module 41, thereby protecting the convex lens to a certain degree.

In this embodiment, as shown in FIGS. 1-6, an optical receiving unit 5 is disposed on the second side wall 15, and configured to receive the external optical signal received by the tail fiber unit 2. The external optical signal received by the optical receiving unit 5 has a wavelength of 1490 nm.

In some examples, the optical receiving unit 5 includes an optical receiving module 51, a second filter 52 and a third filter 53, the optical receiving module 51 being connected to the base 1, and the second filter 52 and the third filter 53 being disposed within the inner cavity 11.

A bottom wall of the second mounting hole 121 of the base 1 is provided with, for example, a second mounting groove 1211. The second filter 52 is bonded into the second mounting groove 1211, and an angle of 45° is formed between a mounting surface of the second mounting groove 1211 and the second optical axis. The second mounting groove 1211 is, for example, also a U-shaped slot. Dispensing may be conducted on two opposite side edges of the third mounting groove, and the amount of adhesive dispensed is kept very small. If too much adhesive is dispensed, it may easily overflow, which requires rework and end-face cleaning for the base 1. The specific amount of adhesive dispensed may be determined according to actual conditions.

The second side wall 15 of the base 1 is provided with a first mounting hole 151, and the first mounting hole 151 is in communication with the inner cavity 11. At least a portion of the optical receiving module 51 is mounted into the first mounting hole 151. A bottom wall of the first mounting hole 151 is provided with a first mounting groove 1511, and the third filter 53 is bonded into the first mounting groove 1511. The first mounting groove 1511 is, for example, a U-shaped slot, and the connection manner thereof with the third filter 53 is the same as that of the second mounting groove 1211 with the second filter 52, which will not be repeated herein.

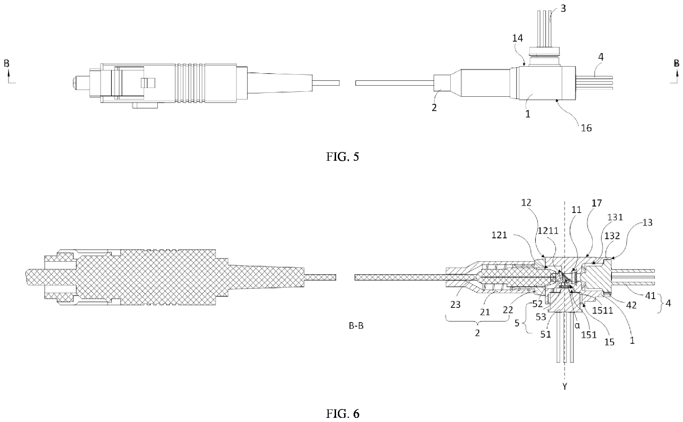

The optical receiving module 51 includes a second optical axis (referring to Y-axis shown in FIG. 6), the second optical axis is perpendicular to the surface of the third filter 53, the second filter 52 is inclined relative to the third filter 53, and the external optical signal received by the tail fiber unit 2 is refracted by the second filter 52, transmitted to the third filter 53, filtered by the third filter, and further transmitted to the optical receiving module 51.

An angle α of 45° is formed between the second filter 52 and the second optical axis, so as to refract the external optical signal toward the third filter 53. The third filter 53 is a 0° filter, which can filter the optical signal. The 45° filter and the 0° filter can be combined to filter light of other wavelengths, ensuring that the light received by the optical receiving module 51 only has a wavelength of 1490 nm.

In this embodiment, the optical receiving unit 5 is disposed on the second side wall 15 of the base 1 and is located on the second optical axis. The first transmitting unit 3 is disposed on the first side wall 14 of the base 1 and is located on the first optical axis. The first side wall 14 and the second side wall 15 are disposed adjacent to each other, such that the optical receiving unit 5 and the first transmitting unit 3 are not opposite to each other but are disposed in a staggered manner. This arrangement differs from the arrangement of single-fiber tri-directional optical devices in the related art, in which transceiver modules are arranged on the same axis or in the same direction. In the present application, the optical receiving unit 5 is coupled via the back side or the side wall, thereby improving the fit between the single-fiber tri-directional optical assembly and the optical modem device, addressing issues of unreasonable layout of the transmitting unit or the receiving unit, and optimizing the overall volume of the single-fiber tri-directional optical assembly.

The single-fiber tri-directional optical assembly provided in the present application integrates a tail fiber unit with coaxial transceiver, a first transmitting unit for a wavelength of 650 nm, a second transmitting unit for a wavelength of 1310 nm, and an optical receiving unit for a wavelength of 1490 nm on a single base, and a ceramic ferrule is provided for optical signal transmission, thereby achieving a two-receiver, one-transmitter functionality. In this way, the number of optical devices is reduced, and the overall volume of the single-fiber tri-directional optical assembly is lowered.

The single-fiber tri-directional optical assembly provided in the present application can also be applied to Gigabit-capable Passive Optical Networks (GPON). By using visible red light in the first transmitting unit, inspection of a fault in an optical link within a short-distance transmission range can be achieved, thereby saving the cost of manual disassembly and providing a good user experience, which is of great significance for further promoting the concept of FTTH.

In the first transmitting unit, a 45° filter and visible red light are employed to calibrate the receiving and transmitting optical links. With the addition of the first optical transmitting module for a wavelength of 650 nm, the single-fiber tri-directional optical assembly can achieve visual calibration within a certain range. The first transmitting unit is disposed on the back side of the base to achieve a staggered configuration, thereby improving the compatibility among the first transmitting unit, the second transmitting unit, and the optical receiving unit.

It is to be understood that the terms used herein are only for the purpose of describing particular example implementations and are not intended for limitation. Unless the context clearly indicates otherwise, the singular forms "a", "one" and "the", as used herein, may also be expressed to include plural forms. The terms "include", "comprise", "contain", and "have" are inclusive and thus specify the presence of stated features, steps, operations, elements, and/or components, but do not preclude the presence or addition of one or more other features, steps, operations, elements, components, and/or combinations thereof. The method steps, procedures, and operations described herein are not to be construed as necessarily requiring that they are performed in the particular order as described or illustrated, unless an order of performance is specified clearly. It is also to be understood that additional or alternative steps may be employed.

Although the terms first, second, third, and the like may be used herein to describe various elements, components, regions, layers and/or sections, these elements, components, regions, layers and/or sections should not be limited by these terms. These terms may be only used to distinguish one element, component, region, layer or section from another region, layer or section. Unless clearly indicated by the context, terms such as "first" and "second" and other numerical terms when used herein do not imply a sequence or order. Thus, a first element, component, region, layer or section discussed below may be termed a second element, component, region, layer or section without departing from the teachings of the exemplary implementations.

The previous description is only for the purpose of describing particular embodiments of the present application, so as to enable those skilled in the art to understand or implement the present application. Many modifications to these embodiments will be obvious to those skilled in the art, and the general principles defined herein can be implemented in other embodiments without departing from the spirit or scope of the present application. Therefore, the present application is not to be limited to these embodiments shown herein, but is to conform with the widest scope consistent with the principles and novel features of the present application herein.

## Claims

1. A single-fiber tri-directional optical assembly, **characterized by** comprising:
a base having an inner cavity for transmitting an optical signal, wherein the base is provided with a first end portion and a second end portion disposed opposite to each other, and the base comprises at least a first side wall and a second side wall disposed adjacent to each other between the first end portion and the second end portion;
a tail fiber unit disposed at the first end portion and configured to receive an external optical signal;
a first transmitting unit disposed on the first side wall, wherein a first optical signal emitted by the first transmitting unit is visible light with a preset wavelength, and the first optical signal is configured to be transmitted to the tail fiber unit;
a second transmitting unit disposed at the second end portion, wherein a second optical signal emitted by the second transmitting unit is configured to be transmitted to the tail fiber unit; and
an optical receiving unit disposed on the second side wall, and configured to receive the external optical signal received by the tail fiber unit.

2. The single-fiber tri-directional optical assembly according to claim 1, **characterized in that** the first transmitting unit is configured to detect an optical link by enabling the visible light to be turned on or off within a preset range; wherein the preset range is 5 km.

3. The single-fiber tri-directional optical assembly according to claim 1 or 2, **characterized in that** the visible light is visible red light with the preset wavelength of 650 nm.

4. The single-fiber tri-directional optical assembly according to claim 1, **characterized in that** the first transmitting unit comprises a first transmitting module, a first adjustment ring, and a first filter, the first transmitting module being mounted to the base by the first adjustment ring, and the first filter being disposed within the inner cavity; wherein
the first transmitting module comprises a first optical axis, and the first filter is located on the first optical axis, such that the visible light emitted by the first transmitting module is reflected via the first filter and transmitted to the tail fiber unit.

5. The single-fiber tri-directional optical assembly according to claim 1, **characterized in that** the second transmitting unit comprises a second transmitting module and a mounting base, the second transmitting module being mounted to the base by the mounting base; wherein
the second optical signal emitted by the second transmitting module has a wavelength of 1310 nm.

6. The single-fiber tri-directional optical assembly according to claim 1, **characterized in that** the optical receiving unit comprises an optical receiving module, a second filter and a third filter, the optical receiving module being connected to the base, and the second filter and the third filter being disposed within the inner cavity; wherein
the optical receiving module comprises a second optical axis perpendicular to the third filter, the second filter is inclined relative to the third filter, and the external optical signal received by the tail fiber unit is refracted by the second filter, transmitted to the third filter, filtered by the third filter, and further transmitted to the optical receiving module.

7. The single-fiber tri-directional optical assembly according to claim 6, **characterized in that** the base is provided with a first mounting hole in communication with the inner cavity, and at least a portion of the optical receiving module is mounted into the first mounting hole; and a bottom wall of the first mounting hole is provided with a first mounting groove, and the third filter is bonded into the first mounting groove; and
the base is further provided with a second mounting hole in communication with the inner cavity, at least a portion of the tail fiber unit is mounted into the second mounting hole, a bottom wall of the second mounting hole is provided with a second mounting groove, the second filter is bonded into the second mounting groove, and an angle of 45° is formed between a mounting surface of the second mounting groove and the second optical axis.

8. The single-fiber tri-directional optical assembly according to claim 4, **characterized in that** the base is provided with a third mounting hole in communication with the inner cavity, and at least a portion of the first transmitting module is mounted into the third mounting hole; and
a bottom wall of the third mounting hole is provided with a third mounting groove, the first filter is bonded into the third mounting groove by dispensing, and an angle of 45° is formed between a mounting surface of the third mounting groove and the first optical axis.

9. The single-fiber tri-directional optical assembly according to claim 5, **characterized in that** the base is provided with a fourth mounting hole in communication with the inner cavity, a protruding ring is disposed at an edge of the fourth mounting hole, and the mounting base is crimped into the protruding ring.

10. The single-fiber tri-directional optical assembly according to claim 1, **characterized in that** the tail fiber unit comprises a fiber tail boot, a tail fiber adjustment ring and a ceramic ferrule; wherein
the ceramic ferrule is mounted to the base by the tail fiber adjustment ring, and the fiber tail boot is sleeved on a radial outer side of the tail fiber adjustment ring.
